# EUROPEAN PATENT APPLICATION

(11) **EP 4 403 689 A1**
(43) Date of publication of application: **24.07.2024**
(21) Application number: 22926319.9
(22) Date of filing: 16.12.2022
(51) Int. Cl.: D06F 39/10, D06F 39/06, B01D 35/02

(54) **FILTER ASSEMBLY AND WASHING MACHINE COMPRISING SAME**

(30) Priority: 09.12.2022 KR 20220171198
(71) Applicant: Microfilter Co., Ltd., Chungcheongbuk-do 27856 (KR)
(72) Inventor: JOUNG, Whi Dong, Seoul 06544 (KR); KIM, Dong Hyun, Gongju-si, Chungcheongnam-do 32541 (KR); LEE, Hyung Gue, Cheongju-si, Chungcheongbuk-do 28791 (KR); LEE, Kyong Su, Hwaseong-si, Gyeonggi-do 18396 (KR); PARK, Jin Geun, Gyeonggi-do 12553 (KR)
(74) Representative: BCKIP Part mbB
(86) International application number: PCT/KR2022/020530
(87) International publication number: WO 2024/122710

(57) **Abstract**

The present disclosure provides a filter assembly and a washing machine including the same, the filter assembly including a first filter case having an inlet and an outlet formed therein such that washing water is introduced thereinto from the outside, and then filtered and discharged therefrom, and a second filter case disposed spaced apart by a predetermined distance from at least one surface of the inner peripheral surfaces of the first filter case, and having at least one filter part provided on at least one surface of the second filter case, at least one of the filter part is located on the upper region and lower region of the second filter case, respectively, and the washing water can be filtered while passing through the filter part from the lower side thereof to the upper side.

## Description

### [Technical Field]

The present disclosure relates to a filter assembly and a washing machine including the same, and more particularly, to a filter assembly capable of filtering washing water when applied to a home appliance for clothes, and a washing machine including the same.

### [Background Art]

In general, a laundry treating apparatus collectively refers to a washing machine which removes dirt from clothes, bedding, or the like (hereinafter referred to as 'cloth') using water, detergent, and mechanical action, a dryer which dries wet cloth using dry hot air heated by a heater and mechanical action, a washing machine-cum-dryer with both washing and drying functions, a refresher which sprays heated steam onto laundry to prevent allergy caused by the cloth, and various other apparatuses which process cloth by applying physical and chemical actions to the cloth.

Additionally, the washing machine may be classified as a top-load type washing machine in which a cloth entrance hole through which cloth comes in and out is formed on the upper surface of the cabinet and washing is performed by the rotational water flow generated when the washing tub rotates, and a drum washing machine in which a cloth entrance hole is formed on the front surface of the cabinet and washing is performed by the fall of the cloth when the drum rotates.

A conventional top-load type washing machine includes a cabinet with its top surface open which forms the external appearance, a base installed at the bottom of the cabinet, an outer tub installed inside the cabinet to store water, a washing tub disposed inside the outer tub to perform washing of cloth, a driving device disposed at the bottom of the washing tub and including a motor for rotating the washing tub, a water supply device for supplying water into the outer tub, and a drainage device for draining the water in the outer tub.

Meanwhile, synthetic fibers are increasingly spread and used widely in recent years. As a result, the amount of fine synthetic microfibers is proliferated in wastewater and surrounding environments, further increasing environmental pollution. In particular, synthetic microfibers are produced/discharged during the washing process of non-biodegradable synthetic fibers, resulting in greater water pollution by fine plastics.

Thus, there is a concern that various fine dust (fine plastic laundry dust, fiber dust, yellow dust, heavy metals, radioactive substances, fine dust, other harmful bacteria, or the like) discharged from laundry such as clothes or the like is discharged to the outside while remaining in the washing water, thereby contaminating the environment.

### [Document of Related Art]

### [Patent Document]

Patent Document 0001: Korean Patent No. 10-2179793

### [Summary of Invention]

### [Technical Problem]

The present disclosure has been conceived to address the above-described technical drawbacks, and its object is to provide a filter assembly and a washing machine including the same, the assembly being capable of making it possible to use the filtering device more effectively for a long time by providing a structure that can easily remove residues such as fine fiber plastics which may be accumulated in the filtering device mounted on the drainage region of a home appliance for clothes.

In addition, another object of the present disclosure is to provide a filter assembly capable of improving filtration efficiency and minimizing the accumulation of residues, such as fine fiber plastics, accumulated in a filter part, and a washing machine including the same, by improving the disposition location of the filter part to enable filtration by the overflow of washing water flowing in the filtering device of a home appliance for clothes.

The technical drawbacks which this disclosure addresses are not limited to the aforementioned ones, but unmentioned other technical drawbacks which can be solved by this disclosure will become apparent to those skilled in the art from the description below.

### [Solution to Problem]

In order to achieve the above-mentioned objects, a filter assembly according to the present disclosure may include
a first filter case having an inlet and an outlet formed therein such that washing water is introduced thereinto from the outside, and then filtered and discharged therefrom; and
a second filter case disposed spaced apart by a predetermined distance from at least one surface of the inner peripheral surfaces of the first filter case, and having at least one filter part provided on at least one surface of the second filter case,
wherein at least one of the filter parts may be disposed at a first location (a location adjacent to the ground) and a second location (a location relatively higher than the first position) of the second filter case, respectively,
wherein the filter assembly may be configured such that at least a portion of the washing water is filtered while passing from the first location to the second location of the filter part.

Here, in an embodiment of the present disclosure, the first location may include a location closest to the ground where the filter assembly is disposed, and the second location may include a location relatively higher from the ground than the first location.

In an embodiment of the present disclosure, the filter part of the second filter case may be fixedly or detachably coupled to a filter mounting member forming an upper surface of the second filter case, and
the washing water may be filtered in the filter part, flow into a distance part by the distance spaced apart from the first filter case, and be discharged to the outlet.

In an embodiment of the present disclosure, the filter mounting member may include a filter mesh-shaped frame part to allow the washing water to flow therethrough, and
at least one separation prevention structure extending upward from the frame part or a side of the first filter case.

Here, in an embodiment of the present disclosure, the separation prevention structure may include a structure extending from one side of the frame part and in close contact with an upper inner surface of the first filter case.

In an embodiment of the present disclosure, one surface of the first filter case may be open, and the second filter case may include a structure capable of being inserted into or extracted from an open region of the first filter case.

In an embodiment of the present disclosure, the filter assembly may further include a residual water prevention structure for preventing leakage of the washing water, which is formed on a lower surface of the first filter case or the second filter case.

In an embodiment of the present disclosure, wherein the outlet of the first filter case may be formed on a lower region of a side surface of the first filter case, and
the inlet may be formed at a higher region than the outlet, and includes a structure formed in a height h₂ range of 50% or less of the total height h₁ of the first filter case.

In an embodiment of the present disclosure, the filter part may be formed of a sheet material of fabric, non-woven fabric, plastic, SUS or metal, and may include a mesh structure.

In an embodiment of the present disclosure, the filter part may be formed in a structure capable of filtering out fine particles having a fine dimension less than 5 mm.

In an embodiment of the present disclosure, the filter part may include a structure in which filters of different materials are formed in a pouch shape with at least their portions bonded to each other.

In an embodiment of the present disclosure, the filter part may include
a first filter including a fabric material as at least a portion thereof; and
a first filter disposed such that at least a portion thereof is spaced apart from the first filter by a predetermined distance to form a pouch-shaped inner space,
wherein the second filter may be formed in a mesh net shape capable of filtering particles relatively smaller than the second filter.

Additionally, a filter assembly according to the present disclosure may include
a first filter case having an inlet and an outlet formed therein such that washing water is introduced thereinto from the outside, and then filtered and discharged therefrom; and
a second filter case disposed spaced apart by a predetermined distance from at least one surface of the inner peripheral surfaces of the first filter case, and having at least one filter part provided on at least one surface of the second filter case,
wherein the filter part may include
an upper filter part including at least one filter mesh disposed in an upper region of an inner peripheral surface in the second filter case, a side surface filter part including at least one filter mesh disposed in a side surface region of the inner peripheral surface, and a lower filter part including at least one filter mesh disposed in a lower region of the inner peripheral surface, and
wherein the washing water may be discharged to the outlet after being filtered in the upper filter part, the side surface filter part and the lower filter part, respectively.

Here, in an embodiment of the present disclosure, at least a portion of the washing water may be filtered in the first filter part, flow in the distance spaced apart from the first filter case, and be discharged to the outlet, and
at least another portion of the washing water may be filtered in the second filter part, flow through the plurality of flow holes, and be discharged to the outlet.

Meanwhile, as the present disclosure provides a home appliance for washing clothes including the filter assembly, it can be preferably applied to, for example, a washing machine.

In an embodiment of the present disclosure, a washing machine may include a washing machine housing constituting an external appearance of the washing machine, a laundry accommodation body which is disposed inside the washing machine housing and rotatably formed, and into which washing water supplied from the outside is introduced, a discharge pipe which forms a fluid communication between the washing machine housing and the laundry accommodation body, and through which the washing water discharged from the laundry accommodation body flows, and a filter assembly disposed on the discharge pipe,
wherein the filter assembly may include a first filter case having an inlet and an outlet formed therein such that washing water is introduced thereinto from the outside, and then filtered and discharged therefrom; and
a second filter case disposed spaced apart by a predetermined distance from at least one surface of the inner peripheral surfaces of the first filter case, and having at least one filter part provided on at least one surface of the second filter case, and
wherein the filter part may be located on an upper side of the first filter case, and the washing water may be filtered while passing through the filter part from a lower side thereof to the upper side.

Also, in an embodiment of the present disclosure, a washing machine may include a washing machine housing constituting an external appearance of the washing machine, a laundry accommodation body which is disposed inside the washing machine housing and rotatably formed, and into which washing water supplied from the outside is introduced, a discharge pipe which forms a fluid communication between the washing machine housing and the laundry accommodation body, and through which the washing water discharged from the laundry accommodation body flows, and a filter assembly disposed on the discharge pipe,
wherein the filter assembly may include a first filter case having an inlet and an outlet formed therein such that washing water is introduced thereinto from the outside, and then filtered and discharged therefrom; and
a second filter case disposed spaced apart by a predetermined distance from at least one surface of the inner peripheral surfaces of the first filter case, and having at least one filter part provided on at least one surface thereof; and
an upper filter part including at least one filter mesh disposed in an upper region of an inner peripheral surface in the second filter case, a side surface filter part including at least one filter mesh disposed in a side surface region of the inner peripheral surface, and a lower filter part including at least one filter mesh disposed in a lower region of the inner peripheral surface, and
wherein the washing water may be discharged to the outlet after being filtered in the upper filter part, the side surface filter part and the lower filter part, respectively.

### [Advantageous Effects of Invention]

The filter assembly according to the present disclosure, and a washing machine including the same provide a following advantageous effect: it is possible to use the filtering device more effectively for a long time by providing a structure that can easily remove residues such as fine fiber plastics which may be accumulated in the filtering device mounted on the drainage region of a home appliance for clothes.

In addition, the filter assembly according to the present disclosure and the washing machine including the same provide a following advantageous effect: it is possible to improve filtration efficiency and minimize the accumulation of residues, such as fine fiber plastics, accumulated in a filter part, by improving the disposition location of the filter part to enable filtration by the overflow of washing water flowing in the filtering device of a home appliance for clothes.

### [Brief Description of Drawings]

FIG. 1 shows a transparent perspective view of a washing machine to which a filter assembly according to an embodiment of the present disclosure is applied,
FIGS. 2 to 4 show views representing a filter assembly according to an embodiment of the present disclosure,
FIG. 5 shows assembled and exploded perspective views of a filter assembly according to an embodiment of the present disclosure,
FIGS. 6 and 7 show cross-sectional views of a filter assembly to which a filter part according to an embodiment of the present disclosure is applied,

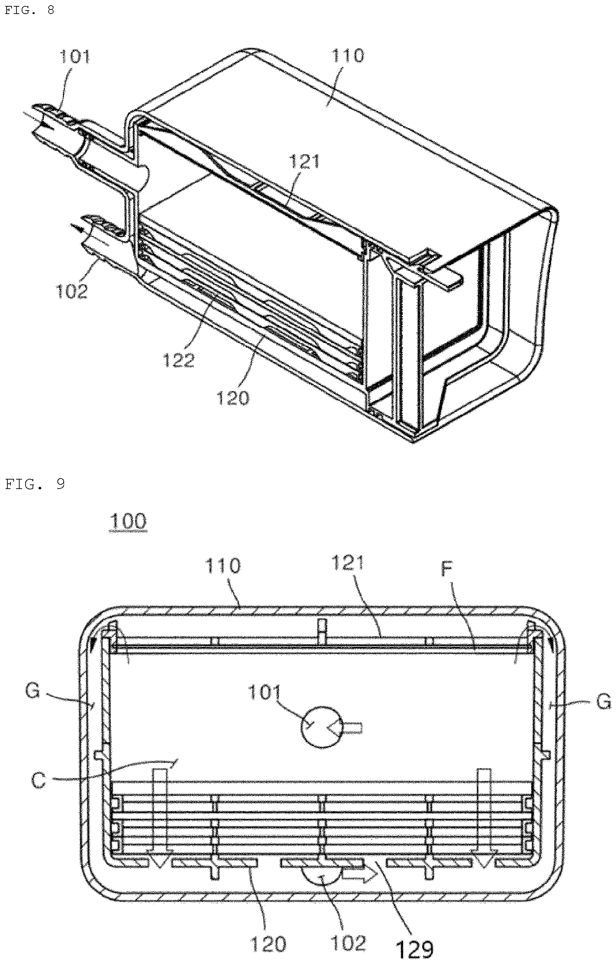

FIGS. 8 and 9 show cross-sectional views of a filter assembly to which a filter part according to another embodiment of the present disclosure is applied,
FIGS. 10 and 11 show enlarged views representing a filter assembly and a residual water prevention structure according to an embodiment of the present disclosure, and
FIGS. 12 and 13 show enlarged views representing a filter case and a separation prevention structure according to an embodiment of the present disclosure.

### [Description of Embodiments]

Hereinafter, an embodiment of the present disclosure will be described in detail with reference to the accompanying drawings.

In adding reference numerals to components of each drawing, it should be noted that the same components have the same reference numerals as much as possible even if they are shown on different drawings. In addition, in describing an embodiment of the present disclosure, if it is determined that a detailed description of a related known configuration or function may prevent the understanding of the present disclosure, the detailed description thereof will be omitted.

In describing the components of an embodiment of the present disclosure, terms such as first, second, A, B, (a), (b), and the like may be used. These terms are only used to distinguish the component from other components, and the nature, sequence, or order of the corresponding component is not limited by the term. Further, unless otherwise defined, all terms used herein, including technical or scientific terms, have the same meaning as commonly understood by a person of ordinary skill in the art to which the present disclosure pertains. Terms as defined in a commonly used dictionary should be interpreted as having a meaning consistent with the meaning in the context of the related technology, and are not to be interpreted as an ideal or excessively formal meaning unless explicitly defined in this application.

An inlet and an outlet described below may mean regions, that is, holes, where fluid flowing in the filter assembly is first introduced and finally discharged, respectively.

As described above, in the case of a clothes washing machine, when used for a long time, most of the fine plastics discharged from textile clothes may be laminated onto a filter mounted on the discharge region. Therefore, the present disclosure is characterized in that it is possible to significantly improve the life span of the filter as well as remove foreign substances such as fine plastics or the like by improving the mounting location and filtering direction of the filter.

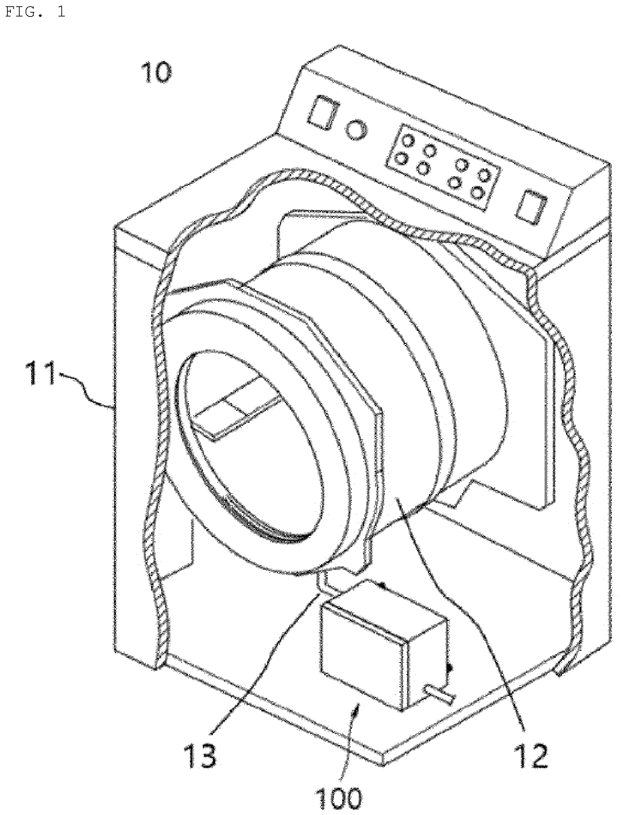

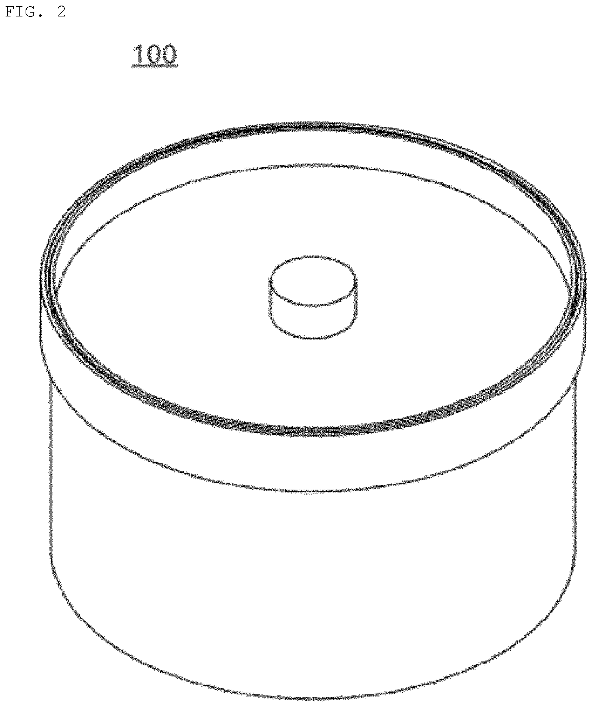

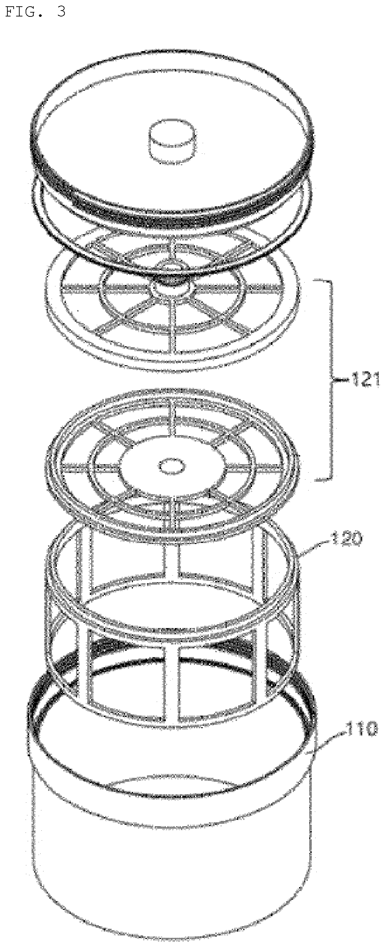

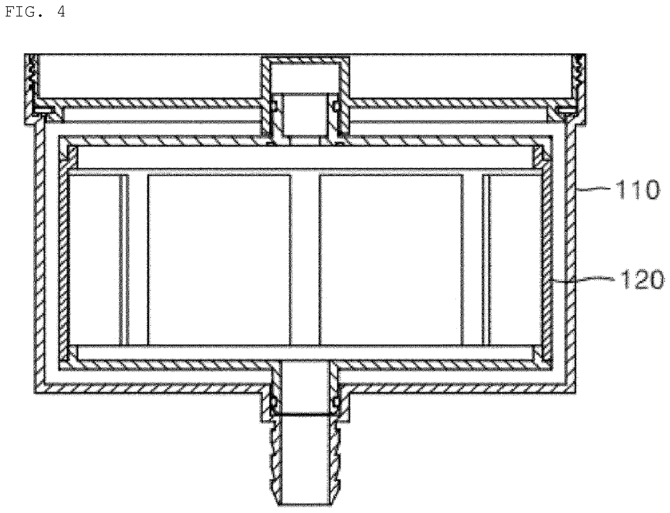

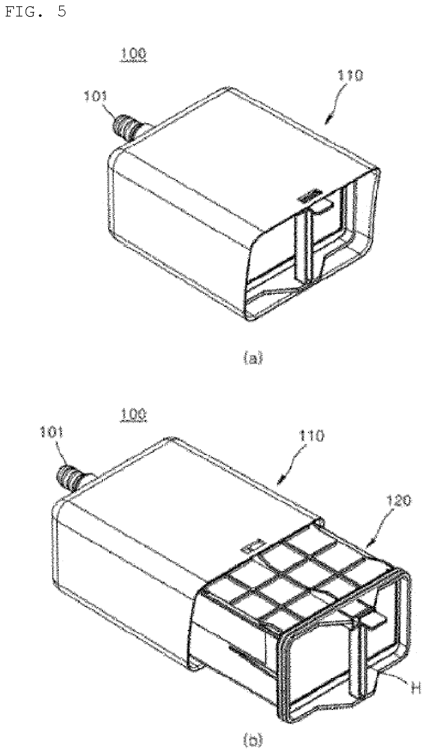

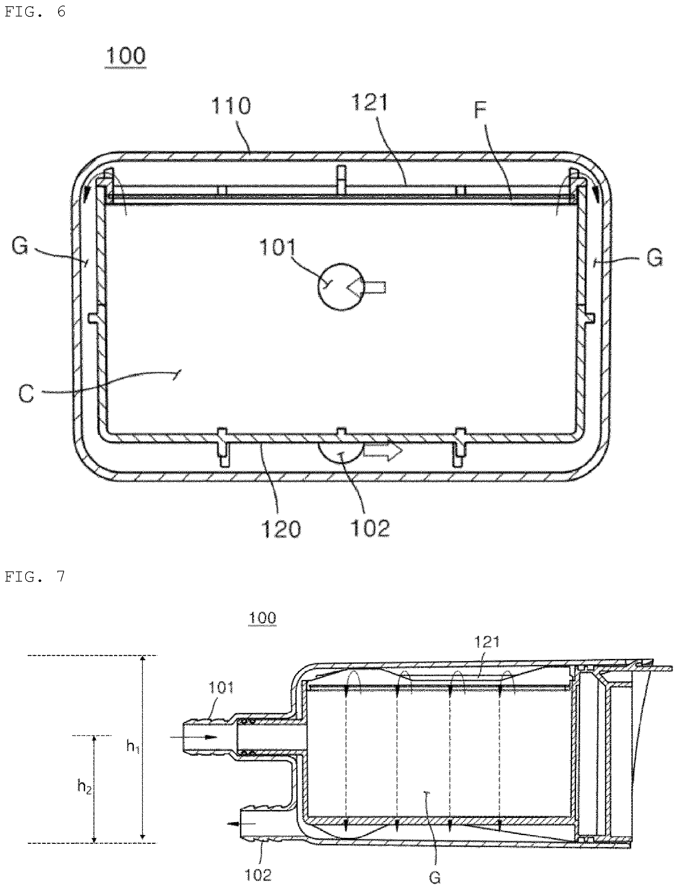

FIG. 1 shows a transparent perspective view of a washing machine to which a filter assembly according to an embodiment of the present disclosure is applied, FIGS. 2 to 4 show various views representing a filter assembly according to an embodiment of the present disclosure, FIG. 5 shows assembled and exploded perspective views of a filter assembly according to an embodiment of the present disclosure, and FIGS. 6 and 7 show cross-sectional views of a filter assembly to which a filter part according to an embodiment of the present disclosure is applied.

First, referring to FIGS. 2 to 4, the washing machine 10 including the filter assembly 100 according to the present disclosure may include a washing machine housing 11 constituting the external appearance of the washing machine, a laundry accommodation body 12 which is disposed inside the washing machine housing 11 and rotatably formed, and into which washing water supplied from the outside is introduced, a discharge pipe 13 which forms a fluid communication between the washing machine housing 11 and the laundry accommodation body 12, and through which the washing water discharged from the laundry accommodation body 12 flows, and a cylindrical filter assembly 100 disposed on the discharge pipe 13. Here, the filter assembly 100 may include a polygonal shape including a cylindrical shape as shown in FIGS. 2 to 4.

Referring to FIGS. 5 to 7, the washing machine 10 including the filter assembly 100 according to the present disclosure may include the washing machine housing 11 constituting the external appearance of the washing machine, the laundry accommodation body 12 which is disposed inside the washing machine housing 11 and rotatably formed, and into which washing water supplied from the outside is introduced, the discharge pipe 13 which forms the fluid communication between the washing machine housing 11 and the laundry accommodation body 12, and through which the washing water discharged from the laundry accommodation body 12 flows, and a filter assembly 100 having a rectangular structure and disposed on the discharge pipe 13.

The washing machine housing 11 may be formed in a rectangular parallelepiped shape constituting the external appearance of the washing machine. Inside the washing machine housing 11, the laundry accommodation body 12 having a hexahedral or cylindrical shape may be rotatably disposed.

Inside the laundry accommodation body 12, a space is formed for accommodating laundry objects such as clothes and the like, and the washing water may be introduced into the inner space of the laundry accommodation body 12. Therefore, the washing objects such as clothes and the like are washed by the washing water accommodated in the laundry accommodation body 12 of the washing machine 10 while being rotated in one direction or both directions. At this time, the filter assembly 100 capable of filtering out particles such as fine plastics may be disposed in the flow of the washing water discharged through the discharge pipe 130 after the washing has been performed in the laundry accommodation body 12.

Here, the filter assembly 100 according to an embodiment of the present disclosure may include a first filter case 110 in which an inlet 101 and an outlet 102 are formed such that washing water is introduced thereinto from the outside, and then filtered and discharged therefrom, a second filter case 120 which is disposed spaced apart by a predetermined distance from the inner peripheral surface of the first filter case 110, and to which a filter part F is coupled, The filter part F of the second filter case 120 may include a structure in which the washing water is filtered at the filter part F of the second filter case 120 by being disposed in the upper region of the first filter case 110 with respect to the bottom surface of the filter assembly 100.

The first filter case 110 may be formed as a rectangular structure with one surface open. The inlet 101 through which the washing water introduced is formed on a region opposite to the open region of the first filter case 100 at a predetermined height h2, and the outlet 102 through which the filtered washing water is discharged may be formed on the lower surface region.

Here, the inlet 101 of the first filter case 110 may be formed at the height h of about 50% or less of the total height H1 of the first filter case 110. That is, according to the present disclosure, the inlet part 101 of the first filter case 110 is formed at the height h₂ of about 50% or less of the total height hi, so that it is possible to minimize the leakage or overflow of the washing water introduced through the inlet 101 due to irregular collisions with the inner peripheral surface of the first filter case 110 by water pressure. Preferably, it is appropriate that the inlet 101 of the first filter case 110 is formed at the height h₂ in the range from 30% to 50% of the total height h₁ of the first filter case 110. In some cases, the formation height h₂ of the inlet 101 of the first filter case 110 may be appropriately adjusted within the above range depending on the stacking height of the additional filter part F which may be disposed in the lower region of the first filter case 110 to be described later.

Also, in some cases, the inlet 101 of the first filter case 110 may be independently detachable. Similarly, the outlet 102 of the first filter case 110 may also be independently detachable.

The second filter case 120 may be inserted into or removed from the open region of the first filter case 120 in a sliding manner. A handle part H may be formed on one side of the second filter case 120, so that the second filter case can be easily extracted or inserted while being held by the user. The second filter case 120 may be provided with an internal chamber space C formed therein, in which the washing water introduced through the inlet 101 of the first filter case 110 is accommodated.

The second filter case 120 may be formed in a structure having an open top surface. A filter mounting member 121 can form a top surface of the second filter case 120 in the open region of the second filter case 120, and can be detachably or fixedly coupled thereto. The filter part F may be easily and interchangeably coupled to the filter mounting member 121.

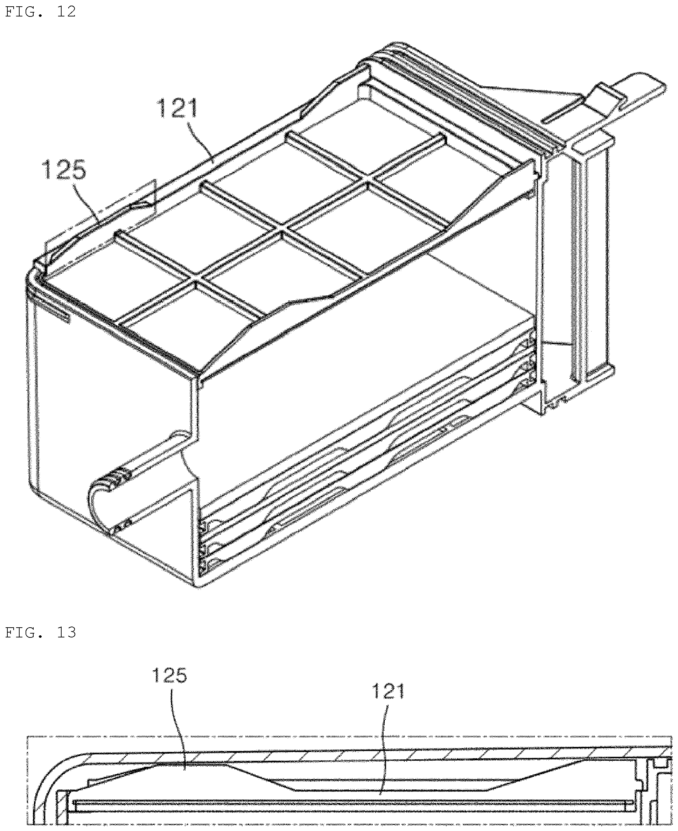

In the filter mounting member 121, a filter mesh-shaped frame part 122 to allow the washing water to flow and a plurality of separation prevention structures (FIG. 12, 125) extending upward from the frame part 122 can be formed. In this regard, the separation prevention structure (FIG. 12, 125) may be formed in a shape that is curved upward and protrudes. Of course, there is no particular restriction on this separation prevention structure (FIG. 12, 125) as long as it can be stably supported when coupled to the first filter case 110.

Therefore, when the second filter case 120 is coupled to the first filter case 110 in a sliding manner, the separation prevention structure (FIG. 12, 125) of the second filter case 120 is brought to close contact with the upper inner peripheral surface of the first filter case 110, thereby being stably coupled thereto without any gap therebetween.

Additionally, the second filter case 120 may be inserted into the first filter case 110 in a sliding manner, and a predetermined separation space G may be formed between the second filter case 120 and the first filter case 110. That is, the filter part F may be mounted on the filter mounting member 121 of the second filter case 120, and the washing water may be filtered through the filter part F and flow into the separation space G.

A process in which the washing water flows through the filter part F disposed in the upper portion of the second filter case 120 will be described below in more detail with reference to the accompanying drawings.

Meanwhile, the filter part F may be disposed at an upper or lower region of the chamber space C of the second filter case 120. That is, the filter part F may be disposed on the inner surface of the chamber space C of the second filter case 120 except for the regions where the inlet 101 and the outlet 102 are formed. Therefore, after the washing water is introduced into the second filter case 110 of the filter assembly 100, it can be filtered through the filter part F and easily discharged therefrom. For example, the filter part F may be formed by bonding opposite ends of the sheet by hot melt bonding, thermal bonding or the like in order to realize the sheet shape into a cylindrical shape. Alternatively, of course, it may also be formed by an insert injection molding scheme.

The filter part F can filter out foreign substances contained in the washing water, for example, fine plastics or the like discharged in large quantities from fibers. The filter part F may be provided as an independent structure that is detachable from the washing machine 10. Therefore, when replacement of the filter part F is required depending on the period of use, the user can easily perform the replacement thereof to continue to use.

Preferably, the filter part F may be formed in a structure capable of filtering out even fine particles having a fine dimension less than 5 mm. In some cases, the filter part may have the fine dimension which enables the filtering out of ultra-fine plastic particles, and may be configured to filter out particles of 0.1 um or less. In an example, the filter part F may be provided as a non-woven fabric formed to have a mesh net shape or a tubular or cylindrical shape in the form of one or two or more stacked layers of sheet material such as fabric, plastic, SUS, metal or the like. Of course, there is no particular restriction on the shape or material of this filter part F as long as the filter part can collect the fine fiber particles filtered out from the washing water.

In an example, the filter part F may be formed with a carbon block filter, a nano electrostatic sheet and a UF sheet which are disposed in the form of surrounding the outer circumferential surface of the carbon block filter. The carbon block filter may include active carbon, a binder, and an additive. The nano electrostatic sheet may include glass fiber, cellulose, alumina fiber, polypropylene (PP), and polyethylene (PE), and the UF sheet may include polysulfone (PSF), polyethersulfone (PES) and polyvinylidene fluoride (PVDF), polypropylene (PP) and polyethylene (PE).

In addition, the filter of the filter part F according to the present disclosure may be formed in a pouch shape in which a collection space is formed inside a pair of filters made of different materials with their outer peripheral regions bonded to each other. In an example, the filter of the different materials of the filter part F may be formed with a filter made of non-woven fabric on the upper side and a filter mesh having a 90 micron mesh structure on the lower side, in a specific example, to collect fine plastics and the like. In this case, their bonding may include a state in which at least a part of them is not easily separated by being coupled to each other with a separate adhesive or by being compressed to each other.

FIGS. 5 and 6 show cross-sectional views of a filter assembly to which a filter part according to another embodiment of the present disclosure is applied.

Referring to these drawings, the filter assembly 100 according to an embodiment of the present disclosure may include a first filter case 110 in which an inlet 101 and an outlet 102 are formed such that washing water is introduced thereinto from the outside, and then filtered and discharged therefrom, a second filter case 120 which is disposed spaced apart by a predetermined distance from the inner peripheral surface of the first filter case, and has a plurality of flow holes 129 formed on its lower surface to guide the movement of the washing water, an upper filter part F including a filter mesh (not shown) disposed in an upper region of the inner peripheral surface in the second filter case 120, and a lower filter part F including a filter mesh (not shown) disposed in a lower region of the inner peripheral surface, and the filter assembly may include a structure in which the washing waters filtered in the upper filter part F and the lower filter part F, respectively join together toward the outlet 102 of the first filter case 110 and are discharged therefrom.

Unlike the above-described embodiment, in the present embodiment, the filter parts F disposed in the second filter case 120 are disposed to form a structure in which they are stacked at predetermined heights in the upper region and the lower region, respectively. According to the present disclosure, there is no particular restriction on the shape, size and number of the flow holes 129. For example, the second filter case 120 may include an outer frame-shaped structure in which a central region is a cavity of a predetermined size, and the cavity may be defined as a 'flow hole'.

Here, in this embodiment, the washing water flowing into the second filter case 120 can be filtered through the filter parts F disposed on the upper and lower sides of the second filter case 120, respectively. That is, a portion of the washing water may be filtered in the first filter part F disposed on the upper region, and flow into the separation space G spaced apart from the first filter case 110, being discharged through the outlet 102 of the first filter case 110, and another portion of the washing water may be filtered in the second filter part F disposed at the lower region, flow through the plurality of flow holes 129, join in the region of the outlet 102, and be discharged therefrom.

Hereinafter, the filtering process by the filter assembly 100 according to the present disclosure described above will be described with accompanying drawings.

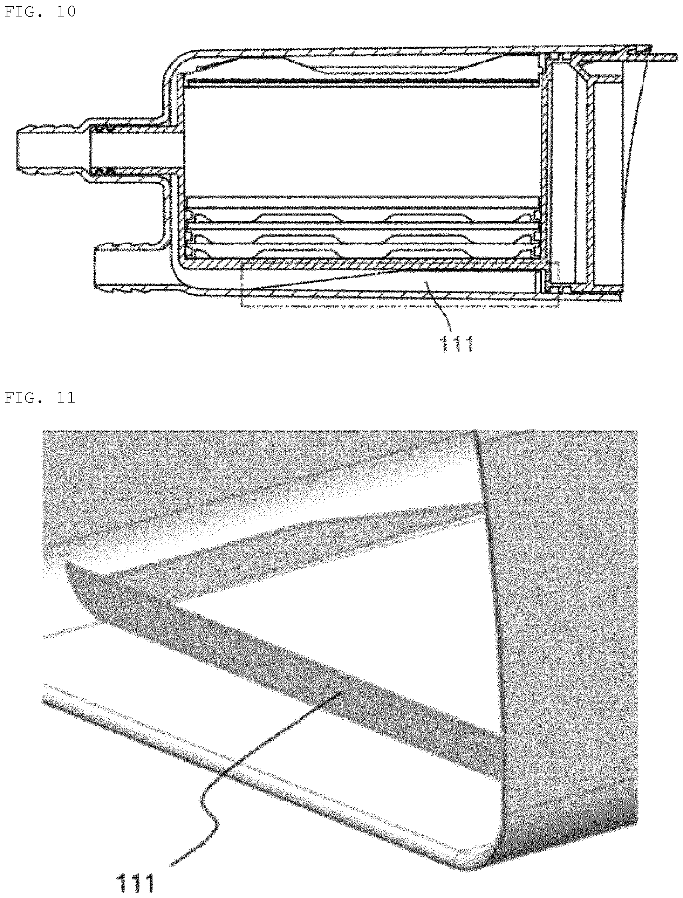

FIGS. 10 and 11 show enlarged views representing a filter assembly and a residual water prevention structure according to an embodiment of the present disclosure, and FIGS. 12 and 13 show enlarged views representing a filter case and a separation prevention structure according to an embodiment of the present disclosure.

When being described with reference to these drawings, first, washing water is supplied to the washing tub of the washing machine 10. The supplied washing water is discharged to the outside of the washing machine 10 through a pipe or a hose after washing of clothes and the like is completed. The washing water discharged from the washing tub is introduced into the filter assembly 100 according to the present disclosure formed at the inner lower part, side surface, outer part, or the like of the washing machine 10 and is filtered before being discharged to the outside.

At this time, since the filter cases 110 and 120 with the above-described filter parts F formed therein are disposed in the filter assembly 100, the washing water introduced after being discharged from the washing tub passes through the filter parts F, and fine fiber plastics can be filtered out.

That is, after the washing water is discharged from the washing tub, it is introduced through the inlet 101 formed at the middle region of the side surface of the first filter case 110 of the filter assembly 100. The introduced washing water is filtered while passing through the filter parts F formed inside the second filter case 120 and capable of filtration of fine plastics, and then, it is discharged to the outside through the outlet 102 formed on the lower side of the second filter case 120. At this time, the washing water filtered through the filter part F disposed on the upper region of the second filter case 120 is discharged to the outlet 102 via the separation space G formed between the first filter case 110 and the second filter case 120, and the washing water filtered through the plurality of filter parts F stacked in the lower region of the second filter case 120 is discharged to the outlet 102 through the plurality of flow holes 129 formed at predetermined intervals in the lower portion of the second filter case 120.

During this filtration process, scale may be formed on the outer surface region of the filter parts F disposed in the second filter case 120 as fine fiber plastics eluted from the washing water are accumulated thereon. At this time, some of the washing water flowing in the second filter case 120 overflows from the lower side to the upper side in the direction toward the filter part F disposed on the upper side, so that it is filtered by a top side filtration method, and then is discharged through the separation space G formed between the first filter case 110 and the second filter case 120, thereby minimizing the accumulation of the scale and the like in the filter part F.

In the above, an embodiment of the present disclosure has been described in detail with reference to the accompanying drawings. However, it should be taken for granted that the embodiments of the present disclosure are not necessarily limited to the above-described embodiment, and various modifications and implementation within the equivalent scope are possible by those skilled in the art to which the present disclosure pertains. Therefore, it should be understood that the true scope of the right of the present disclosure is determined by the claims described later.

### [List of reference signs]

10: Washing machine 11: Washing machine housing
12: Laundry accommodation body 13: Discharge pipe
100: Filter assembly 101: Inlet
102: Outlet 110: First filter case
111: Residual water prevention structure 120: Second filter case
121: Filter mounting member 122: Frame part
125: Separation prevention structure 129: Flow hole
C: Chamber space F: Filter part
G: Separation space H: Handle part

## Claims

1. A filter assembly comprising:
a first filter case having an inlet and an outlet formed therein such that washing water is introduced thereinto from the outside, and then filtered and discharged therefrom; and
a second filter case disposed spaced apart by a predetermined distance from at least one surface of the inner peripheral surfaces of the first filter case, and having at least one filter part provided on at least one surface of the second filter case,
wherein at least one of the filter parts is disposed at a first location (a location adjacent to the ground) and a second location (a location relatively higher than the first position) of the second filter case, respectively, and
wherein the filter assembly is configured such that at least a portion of the washing water is filtered while passing from the first location to the second location of the filter part.

2. The filter assembly of claim 1, wherein the filter part of the second filter case is fixedly or detachably coupled to a filter mounting member forming an upper surface of the second filter case, and
wherein the washing water is filtered in the filter part, flows into a distance part by the distance spaced apart from the first filter case, and is discharged to the outlet.

3. The filter assembly of claim 2, wherein the filter mounting member includes:
a filter mesh-shaped frame part to allow the washing water to flow therethrough, and
at least one separation prevention structure extending upward from the frame part or a side of the first filter case.

4. The filter assembly of claim 3, wherein the separation prevention structure includes a structure extending from one side of the frame part and in close contact with an upper inner surface of the first filter case.

5. The filter assembly of claim 1, wherein one surface of the first filter case is open, and the second filter case includes a structure capable of being inserted into or extracted from an open region of the first filter case.

6. The filter assembly of claim 1, further comprising a residual water prevention structure for preventing leakage of the washing water, which is formed on a lower surface of the first filter case or the second filter case.

7. The filter assembly of claim 1, wherein the outlet of the first filter case is formed on a lower region of a side surface of the first filter case, and
wherein the inlet is formed at a higher region than the outlet, and includes a structure formed in a height h₂ range of 50% or less of the total height h₁ of the first filter case.

8. The filter assembly of claim 1, wherein the filter part is formed of a sheet material of non-woven fabric, fabric, plastic, SUS or metal, and includes a mesh structure.

9. The filter assembly of claim 1, wherein the filter part is formed in a structure capable of filtering out fine particles having a fine dimension less than 5 mm.

10. The filter assembly of claim 1, wherein the filter part includes a structure in which filters of different materials are formed in a pouch shape with at least their portions bonded to each other.

11. The filter assembly of claim 10, wherein the filter part includes:
a first filter including a fabric material as at least a portion thereof; and
a second filter disposed such that at least a portion thereof is spaced apart from the first filter by a predetermined distance to form a pouch-shaped inner space, and
wherein the second filter is formed in a mesh net shape capable of filtering out relatively smaller particles than the first filter.

12. A filter assembly comprising:
a first filter case having an inlet and an outlet formed therein such that washing water is introduced thereinto from the outside, and then filtered and discharged therefrom; and
a second filter case disposed spaced apart by a predetermined distance from at least one surface of the inner peripheral surfaces of the first filter case, and having at least one filter part provided on at least one surface of the second filter case,
wherein the filter part includes:
an upper filter part including at least one filter mesh disposed in an upper region of an inner peripheral surface in the second filter case, a side surface filter part including at least one filter mesh disposed in a side surface region of the inner peripheral surface, and a lower filter part including at least one filter mesh disposed in a lower region of the inner peripheral surface, and
wherein the washing water is discharged to the outlet after being filtered in the upper filter part, the side surface filter part and the lower filter part, respectively.

13. The filter assembly of claim 12, wherein at least a portion of the washing water is filtered in the first filter part, flows in the distance spaced apart from the first filter case, and is discharged to the outlet, and
wherein at least another portion of the washing water is filtered in the second filter part, flows through a plurality of flow holes, and is discharged to the outlet.

14. A washing machine comprising:
a washing machine housing constituting an external appearance of the washing machine, a laundry accommodation body which is disposed inside the washing machine housing and rotatably formed, and into which washing water supplied from the outside is introduced, a discharge pipe which forms a fluid communication between the washing machine housing and the laundry accommodation body, and through which the washing water discharged from the laundry accommodation body flows, and a filter assembly disposed on the discharge pipe,
wherein the filter assembly includes:
a first filter case having an inlet and an outlet formed therein such that washing water is introduced thereinto from the outside, and then filtered and discharged therefrom; and
a second filter case disposed spaced apart by a predetermined distance from at least one surface of the inner peripheral surfaces of the first filter case, and having at least one filter part provided on at least one surface of the second filter case, and
wherein the filter part is located on an upper side of the first filter case, and the washing water is filtered while passing through the filter part from a lower side thereof to the upper side.

15. A washing machine comprising:
a washing machine housing constituting an external appearance of the washing machine, a laundry accommodation body which is disposed inside the washing machine housing and rotatably formed, and into which washing water supplied from the outside is introduced, a discharge pipe which forms a fluid communication between the washing machine housing and the laundry accommodation body, and through which the washing water discharged from the laundry accommodation body flows, and a filter assembly disposed on the discharge pipe,
wherein the filter assembly includes:
a first filter case having an inlet and an outlet formed therein such that washing water is introduced thereinto from the outside, and then filtered and discharged therefrom; and
a second filter case disposed spaced apart by a predetermined distance from at least one surface of the inner peripheral surfaces of the first filter case, and having at least one filter part provided on at least one surface thereof; and
an upper filter part including at least one filter mesh disposed in an upper region of an inner peripheral surface in the second filter case, a side surface filter part including at least one filter mesh disposed in a side surface region of the inner peripheral surface, and a lower filter part including at least one filter mesh disposed in a lower region of the inner peripheral surface, and
wherein the washing water is discharged to the outlet after being filtered in the upper filter part, the side surface filter part and the lower filter part, respectively.
